# EUROPEAN PATENT APPLICATION

(11) **EP 1 847 994 A2**
(43) Date of publication of application: **24.10.2007**
(21) Application number: 07251569.5
(22) Date of filing: 12.04.2007
(51) Int. Cl.: G11B 17/04, G11B 31/00

(54) **Recording / reproducing device-integrated television, recording / reproducing device and recording / reproducing device-integrated electronic apparatus**

(30) Priority: 17.04.2006 JP 2006112832
(71) Applicant: Funai Electric Co., Ltd., Daito-shi, Osaka 574-0013 (JP)
(72) Inventor: Ishii, Hiroki, Daito-shi Osaka 574-0013 (JP); Iwai, Akio, Daito-shi Osaka 574-0013 (JP)
(74) Representative: Calderbank, Thomas Roger

(57) **Abstract**

A recording/reproducing device includes a door member (5) arranged on an opening (2b) of a housing (2) and a spring member (6) urging the door member to bring the door member into a closed state, wherein the door member includes a rotary shaft (5b) arranged on the spring member and a stop portion (5c) regularly engaged with a second end (6c) of the spring member for inhibiting the spring member arranged on the rotary shaft from coming off.

## Description

The present invention relates to a recording/reproducing device-integrated television, a recording/reproducing device and a recording/reproducing device-integrated electronic apparatus, and more particularly, it relates to a recording/reproducing device-integrated television, a recording/reproducing device and a recording/reproducing device-integrated electronic apparatus comprising a door member arranged on an opening of a housing.

A recording/reproducing device rotatably mounted on a door (door member) having a pair of rotary shafts in an opening of a housing is known in general, as disclosed in each of Japanese Patent Laying-Open Nos. 2000-331470 and 2004-55024, for example.

The aforementioned Japanese Patent Laying-Open No. 2000-331470 discloses an MD player (recording/reproducing device) in which a torsion spring (spring member) is arranged in the vicinity of a rotary shaft and first and second arm portions (ends) of the torsion spring are so arranged as to hold support portions of a door and a housing therebetween. A first arm portion of the door of the MD player is engaged with a stop projection (stop portion) formed on a front surface of the door. In the MD player, when the door is rotated forward, the first arm portion of the torsion spring rotates following the rotation of the door, while the second arm portion of the torsion spring engages with a first side surface of the support portion of the housing. When the door is rotated backward, the second arm portion of the torsion spring rotates following the rotation of the door, and the first arm portion of the torsion spring engages with a second side surface of the support portion of the housing. Thus, in the MD player, the torsion spring urges the door in a direction (direction in which the door is closed) opposite to a direction in which the door is rotated, when the door is rotated. In the MD player, when the door rotates backward, the first arm portion of the torsion spring engages with the second side surface of the support portion of the housing to separate from the door. Thus, the first arm portion of the torsion spring and the stop projection of the door disengage from each other.

The aforementioned Japanese Patent Laying-Open No. 2004-55024 discloses a magnetic recording/reproducing device (recording/reproducing device) formed with a notch in an upper edge, formed on both side of the notch with a pair of stop shafts extending inside to be opposed to each other, and mounted with a spring (spring member) constituted by a torsion coil spring urging the door against the pair of stop shafts for bringing into a closed state. In the magnetic recording/reproducing device, the interval between the pair of stop shafts provided in the door is so formed as to be smaller than the length of the spring constituted by the torsion coil spring. Therefore, when the spring constituted by the torsion coil spring is mounted on the pair of stop shafts, a first end of the spring is inserted into one of the pair of stop shafts in an oblique direction such that a second end of the spring reaches a position to be opposed to the other stop shaft. Thereafter the second end of the spring is inserted into the other stop shaft.

However, in the MD player disclosed in the aforementioned Japanese Patent Laying-Open No. 2000-331470, as hereinabove described, when the door is rotated backward, the first arm portion of the torsion spring and the stop projection of the door disengage from each other. Therefore, when the door is rotated backward, in a case where the rotary shaft of the door is detached from the housing in a state where the first arm portion of the torsion spring and the stop projection of the door disengage from each other, the torsion spring arranged in the vicinity of the rotary shaft disadvantageously comes off from the door.

In the magnetic recording/reproducing device disclosed in the aforementioned Japanese Patent Laying-Open No. 2004-55024, the spring constituted by the torsion coil spring is mounted on the pair of stop shafts dissimilarly to the MD player disclosed in the aforementioned Japanese Patent Laying-Open No. 2000-331470, whereby it is possible to inhibit the spring from disadvantageously coming off from the door also in a case where the rotary shaft of the door is detached from the housing. On the other hand, in the magnetic recording/reproducing device in Japanese Patent Laying-Open No. 2004-55024, the interval between the pair of stop shafts provided in the door is smaller than the length of the spring constituted by the torsion coil spring, whereby it is disadvantageously difficult to mount the spring constituted by the torsion coil spring on the pair of stop shafts of the door. In other words, when the spring constituted by the torsion coil spring is mounted on the pair of stop shafts, the first end of the spring is inserted into one of the pair of stop shafts in the oblique direction such that the second end of the spring reaches the position to be opposed to the other stop shaft. Thereafter the second end of the spring is required to be inserted into the other stop shaft. Thus, work for mounting the spring on the door is disadvantageously complicated. Consequently, in the aforementioned Japanese Patent Laying-Open No. 2004-55024, it is disadvantageously difficult to improve workability for mounting the spring on the door.

The present invention has been proposed in the light of the aforementioned problems, and the present invention preferably seeks to provide a recording/reproducing device-integrated television, a recording/reproducing device and a recording/reproducing device-integrated electronic apparatus which may inhibit a spring member from coming off from a door member and allowing improvement in workability for mounting the spring member on the door member.

A recording/reproducing device according to a first aspect of the present invention comprises a housing having an opening for inserting and ejecting a recording medium in and from a device body, a door member arranged on the opening of the housing, and a spring member urging the door member arranged on the opening to bring the door member into a closed state and including a first end coming into contact with the housing and a second end coming into contact with the door member, wherein the door member includes a rotary shaft protruding from a side portion of the door member and arranged with the spring member, and a stop portion provided closer to a center of the door member along an axial direction of the rotary shaft at a prescribed interval from the rotary shaft and regularly engaged with the second end of the spring member for inhibiting the spring member arranged on the rotary shaft from coming off.

In the recording/reproducing device according to the first aspect, as hereinabove described, the door member including the stop portion regularly engaged with the second end of the spring member for inhibiting the spring member arranged on the rotary shaft from coming off is provided, whereby the second end of the spring member is regularly engaged with the stop portion of the door member in each case in which the door member is in an open state or a closed state when the door member is detached from the housing. Thus, the spring member can be inhibited from coming off from the door member. Consequently, it is possible to inhibit an electric short circuit or the like caused by contact of the spring member having come off from the door member with an electronic component such as a circuit board. In addition, the rotary shaft protruding from the side portion of the door member and arranged with the spring member is provided on the door member, and the stop portion of the door member is formed closer to the center of the door member along the axial direction of the rotary shaft at the prescribed interval from the rotary shaft and is so formed as to regularly engage with the second end of the spring member, whereby the spring member is inserted around the rotary shaft of the door member from a side opposite to the center of the door member, and the second end of the inserted spring member is so arranged as to be engaged with the stop portion of the door member. Thus, the spring member can be easily mounted on the door member. Consequently, workability for mounting the spring member on the door member can be improved.

In the aforementioned recording/reproducing device according to the first aspect, the first end of the spring member is preferably so formed as to extend in a direction substantially perpendicular to the axial direction, and the second end of the spring member includes an engaging portion extending along the axial direction, and regularly engaging with the stop portion of the door member in the vicinity of a forward end. According to this structure, the first end of the spring member can be easily come into contact with the housing, and the engaging portion of the second end can come into contact with the door member in a state where the engaging portion of the second end of the spring member can be engaged with the stop portion of the door member.

In this case, the engaging portion of the spring member preferably includes a first engaging portion so formed as to extend in a direction substantially perpendicular to the axial direction, and a second engaging portion so formed as to be inclined by a prescribed angle with respect to a direction in which the first engaging portion extends and inclined by a prescribed angle with respect to the axial direction. According to this structure, the first engaging portion and the second engaging portion can be reliably engaged with the stop portion of the door member.

In the aforementioned structure in which the second end of the spring member extends along the axial direction, and includes the engaging portion in the vicinity of the forward end, the spring member preferably further includes a coil portion arranged between the first end of the spring member and the second end of the spring member and being in the form of a coil, and the second end of the spring member preferably further includes a coupling portion coupling the coil portion and the engaging portion, extending along the axial direction, and coming into contact with the door member in a state of being mounted on the door member. According to this structure, the door member can regulate movement of the coupling portion, whereby rotation of the spring member with respect to the door member can be regulated.

In the aforementioned recording/reproducing device according to the first aspect, the stop portion of the door member preferably includes a notch. According to this structure, the engaging portion of the second end of the spring member can be easily engaged with the notch of the door member.

In the aforementioned recording/reproducing device according to the first aspect, the spring member arranged on the rotary shaft of the door member preferably urges the door member to bring the door member into a closed state, and urges the side portion of the door member in the axial direction. According to this structure, the spring member urges the side portion of the door member also along the axial direction, whereby the door member can be inhibited from looseness in the axial direction in a state where the door member is mounted on the housing.

In the aforementioned recording/reproducing device according to the first aspect, the door member preferably includes a regulating portion so formed as to protrude from the side portion of the door member and come into contact with an inner surface of the housing when the door member is in a closed state. According to this structure, the regulating portion can regulate that the door member urged by the spring member for bringing into the closed state is projected from the opening of the housing.

In the aforementioned recording/reproducing device according to the first aspect, the housing preferably includes a contact portion so formed as to come into contact with the first end of the spring member and protrude in a direction substantially perpendicular to an inner surface of the housing. According to this structure, the contact portion protrudes in a direction against urging force of the first end of the spring member, whereby the urging force of the first end of the spring member coming into contact with the contact portion is increased and the first end of the spring member can be reliably come into contact with the contact portion.

A recording/reproducing device-integrated television according to a second aspect of the present invention comprises a housing having an opening for inserting and ejecting a recording medium in and from a device body, a door member arranged on the opening of the housing, and a spring member urging the door member arranged on the opening to bring the door member into a closed state and including a first end coming into contact with the housing and a second end coming into contact with the door member, wherein the door member includes a rotary shaft protruding from a side portion of the door member and arranged with the spring member, and a stop portion provided closer to a center of the door member along an axial direction of the rotary shaft at a prescribed interval from the rotary shaft, the first end of the spring member is so formed as to extend in a direction substantially perpendicular to the axial direction, the second end of the spring member includes an engaging portion extending along the axial direction, and regularly engaging with the stop portion of the door member in the vicinity of a forward end, the engaging portion of the second end of the spring member is regularly engaged with the stop portion of the door member for inhibiting the spring member arranged on the rotary shaft from coming off, the stop portion of the door member includes a notch, and the spring member urges the side portion of the door member in the axial direction.

In the recording/reproducing device-integrated television according to the second aspect, as hereinabove described, the door member including the stop portion regularly engaged with the second end of the spring member for inhibiting the spring member arranged on the rotary shaft from coming off is provided, whereby the second end of the spring member is regularly engaged with the stop portion of the door member in each case in which the door member is in an open state or a closed state when the door member is detached from the housing. Thus, the spring member can be inhibited from coming off from the door member. Consequently, it is possible to inhibit an electric short circuit or the like caused by contact of the spring member having come off from the door member with an electronic component such as a circuit board. In addition, the rotary shaft protruding from the side portion of the door member and arranged with the spring member is provided on the door member, and the stop portion of the door member is formed closer to the center of the door member along the axial direction of the rotary shaft at the prescribed interval from the rotary shaft and is so formed as to regularly engage with the second end of the spring member, whereby the spring member is inserted around the rotary shaft of the door member from a side opposite to the center of the door member, and the second end of the inserted spring member is so arranged as to be engaged with the stop portion of the door member. Thus, the spring member can be easily mounted on the door member. Consequently, workability for mounting the spring member on the door member can be improved.

In this case, the engaging portion of the spring member preferably includes a first engaging portion so formed as to extend in a direction substantially perpendicular to the axial direction, and a second engaging portion so formed as to be inclined by a prescribed angle with respect to a direction in which the first engaging portion extends and inclined by a prescribed angle with respect to the axial direction. According to this structure, the first engaging portion and the second engaging portion can be reliably engaged with the stop portion of the door member.

In the aforementioned structure in which the second end of the spring member extends along the axial direction and includes the engaging portion in the vicinity of the forward end, the spring member preferably further includes a coil portion arranged between the first end of the spring member and the second end of the spring member and being in the form of a coil, and the second end of the spring member further includes a coupling portion coupling the coil portion and the engaging portion, extending along the axial direction, and coming into contact with the door member in a state of being mounted on the door member. According to this structure, the coupling portion can regulate movement of the door member, whereby rotation of the spring member with respect to the door member can be regulated.

In the aforementioned recording/reproducing device-integrated television according to the second aspect, the door member preferably includes a regulating portion so formed as to protrude from the side portion of the door member and come into contact with an inner surface of the housing when the door member is in a closed state. According to this structure, the regulating portion can regulate that the door member urged by the spring member for bringing the door member into the closed state is projected from the opening of the housing.

In the aforementioned recording/reproducing device-integrated television according to the second aspect, the housing preferably includes a contact portion so formed as to come into contact with the first end of the spring member and protrude in a direction substantially perpendicular to an inner surface of the housing. According to this structure, the contact portion protrudes in a direction against urging force of the first end of the spring member, whereby the urging force of the first end of the spring member coming into contact with the contact portion is increased and the first end of the spring member can be reliably come into contact with the contact portion.

A recording/reproducing device-integrated electronic apparatus according to a third aspect of the present invention comprises a recording/reproducing device comprising a housing having an opening for inserting and ejecting a recording medium in and from a device body, a door member arranged on the opening of the housing, and a spring member urging the door member arranged on the opening to bring the door member into a closed state, and including a first end coming into contact with the housing and a second end coming into contact with the door member, wherein the door member includes a rotary shaft protruding from a side portion of the door member and arranged with the spring member, and a stop portion provided closer to a center of the door member along an axial direction of the rotary shaft at a prescribed interval from the rotary shaft and regularly engaged with the second end of the spring member for inhibiting the spring member arranged on the rotary shaft from coming off. According to this structure, the recording/reproducing device-integrated electronic apparatus capable of easily inhibiting the spring member from coming off from the door member and allowing improvement in workability for mounting the spring member on the door member.

The foregoing and other objects, features, aspects and advantages of the present invention will become more apparent from the following detailed description of the present invention when taken in conjunction with the accompanying drawings.
In the drawings:
Fig. 1 is a front elevational view shoring an overall structure of a video cassette recorder-integrated television according to an embodiment of the present invention;
Fig. 2 is an exploded perspective view showing a video cassette recorder-integrated television according to the embodiment shown in Fig. 1.;
Fig. 3 is an enlarged perspective view showing a door member of the video cassette recorder-integrated television according to the embodiment shown in Fig. 1, mounted with a coil spring;
Fig. 4 is a sectional view taken along the line 100-100 of Fig. 3;
Fig. 5 is an enlarged front elevational view showing the door member of the video cassette recorder-integrated television according to the embodiment shown in Fig. 1, as viewed from inside; and
Fig. 6 is an enlarged front elevational view showing the door member of the video cassette recorder-integrated television according to a modification of the embodiment shown in Fig. 1, as viewed from inside.

An embodiment of the present invention will be hereinafter described with reference to the drawings.

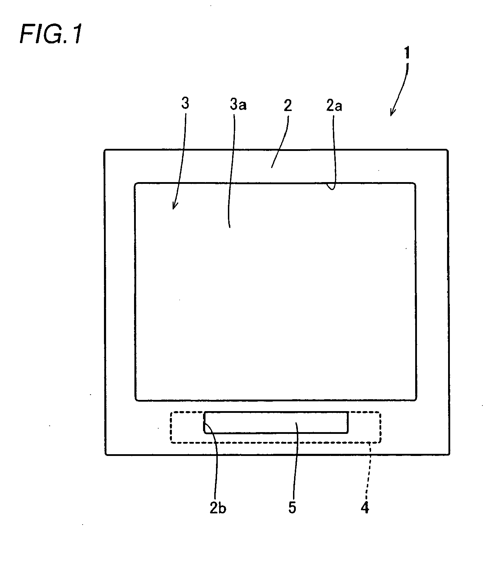

A structure of a video cassette recorder-integrated television 1 according to an embodiment of the present invention will be described with reference to Figs. 1 to 5. The embodiment of the present invention is applied to the video cassette recorder-integrated television, which is an exemplary recording/reproducing device-integrated television.

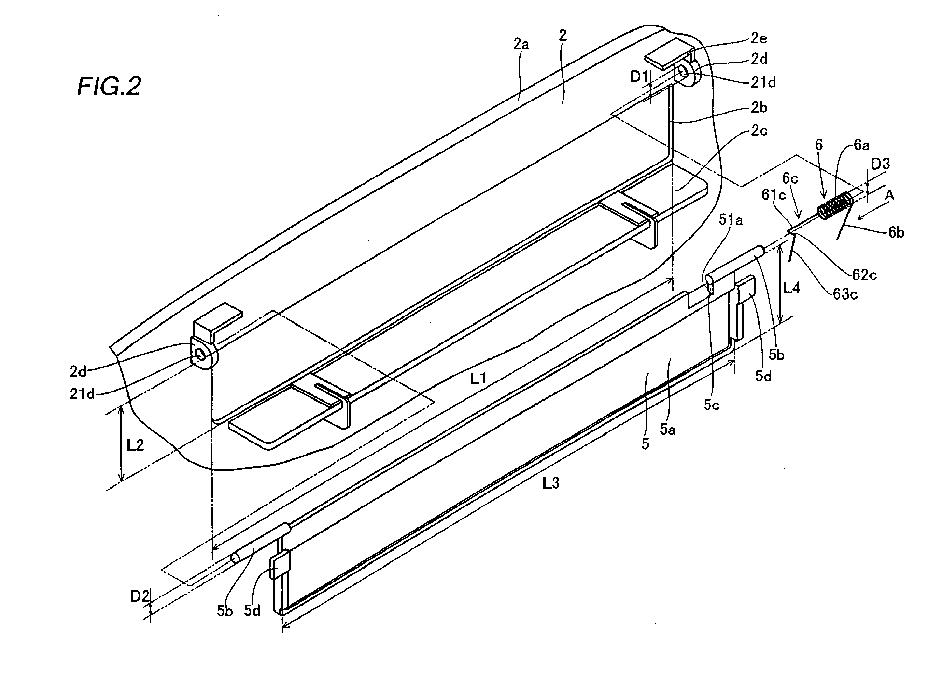

The video cassette recorder-integrated television 1 according to the embodiment of the present invention comprises a cabinet 2 constituting an outer frame of video cassette recorder-integrated television 1, a CRT (cathode ray tube) 3 mounted on the cabinet 2, a video cassette recorder 4 arranged below the CRT 3, a door member 5 made of resin mounted on the cabinet 2 in an openable/closable manner, and a coil spring 6 (see Fig. 2) for urging the door member 5, as shown in Fig. 1. The cabinet 2 is an example of the "housing" in the present invention and the coil spring 6 is an example of the spring member in the present invention.

The cabinet 2 includes a display window 2a exposing a display region 3a of the CRT 3 outside, an opening 2b for inserting a videotape (not shown) into the video cassette recorder 4 and ejecting the same from the video cassette recorder 4, a guide portion 2c functioning as a guide for inserting the videotape (not shown) into the video cassette recorder 4 and ejecting the same from the video cassette recorder 4, a pair of door member mounting portions 2d rotatably supporting the door member 5, and a contact portion 2e coming into contact with an after-mentioned first end 6b of the coil spring 6, as shown in Figs. 1 and 2.

The opening 2b of the cabinet 2 is in the form of a rectangle and is formed below the display window 2a. The length L1 in a longitudinal direction (width direction) of the opening 2b is slightly larger than the length of the videotape (not shown) while the length L2 in a short-side direction (height direction) is slightly larger than the thickness of the videotape (not shown).

The guide portion 2c of the cabinet 2, the door member mounting portions 2d and the contact portion 2e are so formed inside the cabinet 2 as to protrude and extend in a direction substantially perpendicular to an inner surface of the cabinet 2. The guide portion 2c is formed in the vicinity of a lower end of the opening 2b in the form of a plate so as to extend along the longitudinal direction of the opening 2b. The pair of door member mounting portions 2d are formed in the vicinity of an upper end of the opening 2b lateral to the opening 2b respectively. The pair of door member mounting portions 2d are formed with rotary shaft receiving holes 21d receiving after-mentioned rotary shafts 5b of the door member 5 so as to extend in the longitudinal direction of the opening 2b respectively. The rotary shaft receiving holes 21d are in the form of a circular having a diameter D1. The contact portion 2e is so formed closer to an inner portion of the opening 2b from above the door member mounting portion 2d as to extend in a longitudinal direction of the opening 2b.

According to the embodiment, the door member 5 made of resin includes a plate-like door portion 5a, the cylindrical rotary shafts 5b protruding outward from upper ends of both side portions of the door portion 5a respectively, a notch 5c regularly engaged with an after-mentioned second end 6c of the coil spring 6, and rotation regulating portions 5d protruding outward from the both side portions of the door portion 5a respectively, as shown in Figs. 2 to 5. The notch 5c is an example of the "stop portion" in the present invention.

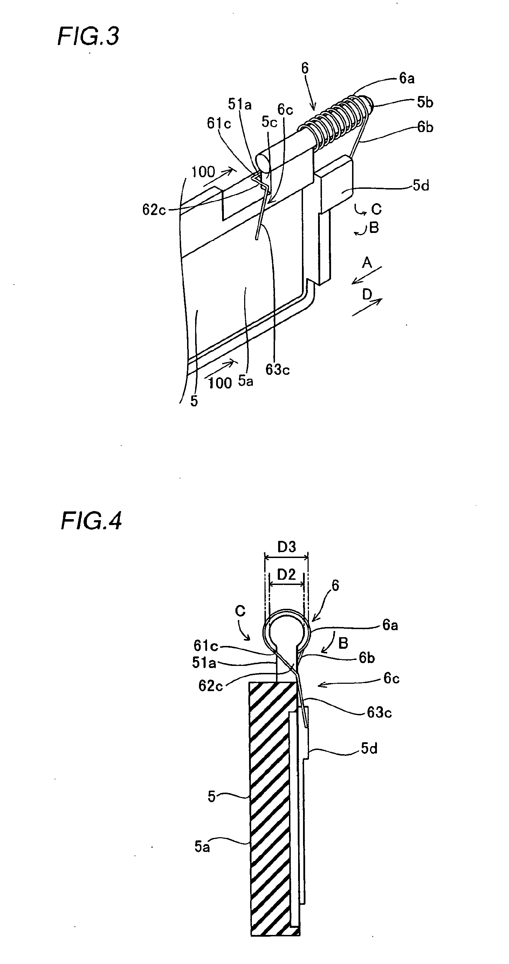

According to the embodiment, the length L3 in a longitudinal direction of the door portion 5a of the door member 5 is the substantially same as the length L1 in the longitudinal direction of the opening 2b of the cabinet 2, while the length L4 in a short-side direction (height direction) is the substantially same as the length L2 in the short-side direction of the opening 2b of the cabinet 2. The door portion 5a made of resin is so formed as to be elastically deformable when the door member 5 is mounted on the cabinet 2. A contact portion 51a (see Fig. 4) is formed on a front surface between one of the rotary shafts 5b of the door portion 5a and the notch 5c.

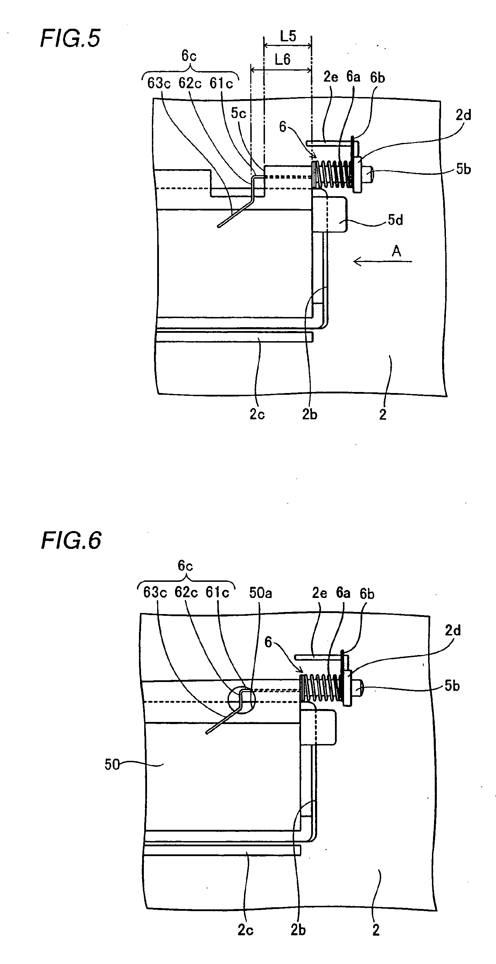

The cylindrical rotary shafts 5b of the door member 5 have the diameter D2 (see Fig. 2) which is the substantially same as the diameter D1 of the circular rotary shaft receiving holes 21d. The pair of rotary shafts 5b are inserted into the rotary shaft receiving holes 21d of the cabinet 2 respectively, whereby the door member 5 is rotatably mounted about the rotary shafts 5b. As shown in Fig. 5, the notch 5c of the door member 5 is formed closer to a center (along arrow A) of the door member 5 along an axial direction of the rotary shafts 5b at the interval L5 (see Fig. 5) from the one of the rotary shafts 5b. The door portion 5a is located parallel to a front surface of the cabinet 2, whereby the pair of rotation regulating portions 5d of door member 5 come into contact with an inner surface of the cabinet 2 when the door member 5 is in a closed state. Thus, the door member 5 urged toward an outer surface of the cabinet 2 by the coil spring 6 can be inhibited from projecting toward the outer surface of the cabinet 2.

According to the embodiment, the coil spring 6 includes a coil portion 6a, a first end 6b and a second end 6c as shown in Figs. 3 to 5. The coil portion 6a of the coil spring 6 has the inner diameter D3 (see Fig. 4) larger than diameter D2 (see Fig. 4) of the rotary shafts 5b of the door member 5. The coil portion 6a has a function of urging the door member 5 along arrow A by a function of the compression coil spring and urging the door member 5 along arrow B by a function of a torsion coil spring in a state where the door member 5 is mounted on the cabinet 2. The first end 6b of the coil spring 6 is so formed as to extend in a direction substantially perpendicular to a length direction of the coil portion 6a. The first end 6b is so provided as to come into contact with the contact portion 2e of the cabinet 2 in a state where the door member 5 is mounted on the cabinet 2.

According to the embodiment, the second end 6c of the coil spring 6 includes a coupling portion 61c so formed as to extend along the length direction of the coil portion 6a, an engaging portion 62c so formed as to extend in a direction substantially perpendicular to the length direction of the coil portion 6a and an engaging portion 63c. The engaging portion 63c is inclined by a prescribed angle with respect to a direction in which the engaging portion 62c extends while being inclined by a prescribed angle with respect to the length direction of the coil portion 6a, as shown in Figs. 4 and 5. The coupling portion 61c of the second end 6c has the length L6 (see Fig. 5) larger than the interval L5 (see Fig. 5) from the one of the rotary shafts 5b to the notch 5c. The coupling portion 61c is elastically deformed, whereby the engaging portion 63c arranged on a front surface of the door portion 5a can be arranged on a back surface of the door portion 5a. The engaging portion 62c is an example of the "first engaging portion" in the present invention, the engaging portion 63c is an example of the "second engaging portion" in the present invention.

The coupling portion 61c has a function of regulating rotation of the coil spring 6 in a direction C by coming into contact with the contact portion 51a (see Fig. 4) of the door portion 5a in a state where the coil spring 6 is mounted on the door member 5. The engaging portion 63c has a function of regulating rotation of the coil spring 6 in a direction B by coming into contact with the back surface of the door portion 5a in a state where the coil spring 6 is mounted on the door member 5. Thus, the rotation of the coil spring 6 in the B direction and the C direction is regularly regulated in a state where the coil spring 6 is mounted on the door member 5, whereby in a case where the coil spring 6 moves along arrow D (see Fig. 3), the coil spring 6 is so formed that movement of the coil spring 6 along arrow D (see Fig. 3) can be regulated by regularly engaging the engaging portion 62c with the notch 5c.

The engaging portions 62c and 63c of the coil spring 6 are so provided as to come into contact with the back surface of the door portion 5a in a state where the door member 5 is mounted on the cabinet 2.

With reference to Figs. 2 to 4, a description will be now made of a method of mounting the door member 5 of the video cassette recorder-integrated television 1 according to the embodiment on the coil spring 6.

As shown in Fig. 2, the coil spring 6 is moved along arrow A, whereby the coil portion 6a receives the one of the rotary shafts 5b of the door member 5 until the second end 6c of the coil portion 6a comes into contact with a first side portion of the door member 5. At this time, the second end 6c of the coil spring 6 is arranged on the front surface of the door member 5. Then, the coil spring 6 is rotated in the direction C in a state where the coupling portion 61c of the second end 6c is elastically deformed, whereby the engaging portion 63c of the second end 6c arranged on the front surface of the door member 5 is arranged on the back surface of the door member 5. Thus, the coil spring 6 is mounted on the door member 5 as shown in Figs. 3 and 4.

According to the embodiment, as hereinabove described, the door member 5 including the notch 5c regularly engaged with the second end 6c of the coil spring 6 for inhibiting the coil spring 6 arranged on the one of the rotary shafts 5b from coming off is provided, whereby the second end 6c of the coil spring 6 is regularly engaged with the notch 5c of the door member 5 in each case in which the door member 5 is in an open state or a closed state when the door member 5 is detached from the cabinet 2. Thus, the coil spring 6 can be inhibited from coming off from the door member 5. Consequently, it is possible to inhibit an electric short circuit or the like caused by contact of the coil spring 6 having come off from the door member 5 with an electronic component such as a circuit board.

According to the embodiment, the rotary shaft 5b protruding from the side portion of the door member 5 and arranged with the coil spring 6 is provided on door member 5, and the notch 5c of the door member 5 is formed closer to the center of the door member 5 along the axial direction of the rotary shafts 5b at the interval L5 (see Fig. 5) from the one of the rotary shafts 5b and is so formed as to regularly engage with the second end 6c of the coil spring 6, whereby the coil spring 6 is inserted around the one of the rotary shafts 5b protruding from the side portion of the door member 5 along arrow A, and the second end 6c of the inserted coil spring 6 is so arranged as to be engaged with the notch 5c of the door member 5. Thus, the coil spring 6 can be easily mounted on the door member 5. Consequently, workability for mounting the coil spring 6 on the door member 5 can be improved.

According to the embodiment, the first end 6b of the coil spring 6 is so formed as to extend in a direction substantially perpendicular to an axial direction, and the second end 6c of the coil spring 6 is so formed as to extend along the axial direction and include the engaging portion 62c regularly engaging with the notch 5c of the door member 5 in the vicinity of a forward end, whereby the first end 6b of the coil spring 6 can be easily come into contact with the cabinet 2 and the engaging portions 62c and 63c of the second end 6c can be brought into contact with the door portion 5a of the door member 5 in a state where the engaging portion 62c of the second end 6c of the coil spring 6 can be engaged with the notch 5c of the door member 5.

According to the embodiment, the engaging portion of the coil spring 6 includes the engaging portion 62c so formed as to extend in a direction substantially perpendicular to the axial direction, and the engaging portion 63c so formed as to be inclined by the prescribed angle in the direction in which the engaging portion 62c extends while being inclined by the prescribed angle with respect to the axial direction, whereby the engaging portions 62c and 63c can be reliably engaged with the notch 5c of the door member 5.

According to the embodiment, the coil spring 6 includes the coil portion 6a in the form of a coil, arranged between the first end 6b of the coil spring 6 and the second end 6c of the coil spring 6, and the second end 6c of the coil spring 6 includes the coupling portion 61c coupling the coil portion 6a and the engaging portion 62c, extending along the axial direction, and coming into contact with the door member 5 in a state of being mounted on the door member 5, whereby the door member 5 regulates the movement of the coupling portion 61c. Thus, rotation of the coil spring 6 with respect to the door member 5 can be regulated.

According to the embodiment, the coil spring 6 arranged on the one of the rotary shafts 5b of the door member 5 is so formed as to urge the door member 5 in the direction B and urge the side portion of the door member 5 along arrow A, whereby the coil spring 6 urges the side portion of the door member 5 also along arrow A. Thus, the door member 5 mounted on the cabinet 2 can be inhibited from looseness in the axial direction (along arrows A and D).

According to the embodiment, the door member 5 includes the rotation regulating portions 5d protruding from the side portions of the door member 5 and coming into contact with the inner surface of the cabinet 2 when the door member 5 is in a closed state, whereby the rotation regulating portions 5d can regulate that the door member 5 urged by the coil spring 6 for bringing into the closed state is projected toward the outer surface of the cabinet 2.

Although the present invention has been described and illustrated in detail, it is clearly understood that the same is by way of illustration and example only and is not to be taken by way of limitation, the spirit and scope of the present invention being limited only by the terms of the appended claims, as interpreted by the description and drawings.

For example, while the aforementioned embodiment of the present invention is applied to the video cassette recorder-integrated television 1 comprising the video cassette recorder 4 as an exemplary recording/reproducing device-integrated television, the present invention is not restricted to this but is also applicable to an electronic apparatus comprising other recording/reproducing device such as a floppy disk drive or an MD player.

While the notch 5c as an exemplary stop portion of the door member 5 is formed, and the engaging portion 62c of the coil spring 6 is engaged with the notch 5c in the aforementioned embodiment, the present invention is not restricted to this but a circular engaging hole 50a may be alternatively formed similarly to a door member 50 of a modification shown in Fig. 6 and the engaging portion 62c of the coil spring 6 may be engaged with the engaging hole 50a.

While the coil spring 6 is arranged only on the one of the rotary shafts 5b and the notch 5c engaged with the engaging portion 62c of the coil spring 6 is formed in the door member 5 in the aforementioned embodiment, the present invention is not restricted to this but coil springs may be alternatively arranged on the one and other rotary shafts respectively and notches engaged with the engaging portions of the two coil spring respectively may be formed in the door member.

## Claims

1. A recording/reproducing device comprising:
a housing (2) having an opening (2b) for inserting and ejecting a recording medium in and from a device body;
a door member (5) arranged on said opening of said housing; and
a spring member (6) urging said door member arranged on said opening to bring said door member into a closed state, and including a first end (6b) coming into contact with said housing and a second end (6c) coming into contact with said door member, wherein
said door member includes a rotary shaft (5b) protruding from a side portion of said door member and arranged with said spring member, and a stop portion (5c) provided closer to a center of said door member along an axial direction of said rotary shaft at a prescribed interval from said rotary shaft and regularly engaged with said second end of said spring member for inhibiting said spring member arranged on said rotary shaft from coming off.

2. The recording/reproducing device according to claim 1, wherein
said first end of said spring member is so formed as to extend in a direction substantially perpendicular to said axial direction, and
said second end of said spring member includes an engaging portion (62c, 63c) extending along said axial direction, and regularly engaging with said stop portion of said door member in the vicinity of a forward end.

3. The recording/reproducing device according to claim 2, wherein
said engaging portion of said spring member includes a first engaging portion (62c) so formed as to extend in a direction substantially perpendicular to said axial direction, and a second engaging portion (63c) so formed as to be inclined by a prescribed angle with respect to a direction in which said first engaging portion extends and inclined by a prescribed angle with respect to said axial direction.

4. The recording/reproducing device according to claim 2, wherein
said spring member further includes a coil portion (6a) arranged between said first end of said spring member and said second end of said spring member and being in the form of a coil, and
said second end of said spring member further includes a coupling portion (61c) coupling said coil portion and said engaging portion, extending along said axial direction, and coming into contact with said door member in a state of being mounted on said door member.

5. The recording/reproducing device according to claim 1, wherein
said stop portion of said door member includes a notch.

6. The recording/reproducing device according to claim 1, wherein
said spring member arranged on said rotary shaft of said door member urges said door member to bring said door member into a closed state, and urges said side portion of said door member in said axial direction.

7. The recording/reproducing device according to claim 1, wherein
said door member includes a regulating portion so formed as to protrude from said side portion of said door member and come into contact with an inner surface of said housing when said door member is in a closed state.

8. The recording/reproducing device according to claim 1, wherein
said housing includes a contact portion so formed as to come into contact with said first end of said spring member and protrude in a direction substantially perpendicular to an inner surface of said housing.

9. A recording/reproducing device-integrated television comprising:
a housing (2) having an opening (2b) for inserting and ejecting a recording medium in and from a device body;
a door member (5) arranged on said opening of said housing; and
a spring member (6) urging said door member arranged on said opening to bring said door member into a closed state, and including a first end (6b) coming into contact with said housing and a second end (6c) coming into contact with said door member, wherein
said door member includes a rotary shaft (5b) protruding from a side portion of said door member and arranged with said spring member, and a stop portion (5c) provided closer to a center of said door member along an axial direction of said rotary shaft at a prescribed interval from said rotary shaft,
said first end of said spring member is so formed as to extend in a direction substantially perpendicular to said axial direction,
said second end of said spring member includes an engaging portion (62c, 63c) extending along said axial direction, and regularly engaging with said stop portion of said door member in the vicinity of a forward end,
said engaging portion of said second end of said spring member is regularly engaged with said stop portion of said door member for inhibiting said spring member arranged on said rotary shaft from coming off,
said stop portion of said door member includes a notch, and
said spring member urges said side portion of said door member in said axial direction.

10. The recording/reproducing device-integrated television according to claim 9, wherein
said engaging portion of said spring member includes a first engaging portion (62c) so formed as to extend in a direction substantially perpendicular to said axial direction, and a second engaging portion (63c) so formed as to be inclined by a prescribed angle with respect to a direction in which said first engaging portion extends and inclined by a prescribed angle with respect to said axial direction.

11. The recording/reproducing device-integrated television according to claim 9, wherein
said spring member further includes a coil portion (6a) arranged between said first end of said spring member and said second end of said spring member and being in the form of a coil, and
said second end of said spring member further includes a coupling portion (61c) coupling said coil portion and said engaging portion, extending along said axial direction, and coming into contact with said door member in a state of being mounted on said door member.

12. The recording/reproducing device-integrated television according to claim 9, wherein
said door member includes a regulating portion so formed as to protrude from said side portion of said door member and come into contact with an inner surface of said housing when said door member is in a closed state.

13. The recording/reproducing device-integrated television according to claim 9, wherein
said housing includes a contact portion so formed as to come into contact with said first end of said spring member and protrude in a direction substantially perpendicular to an inner surface of said housing.

14. A recording/reproducing device-integrated electronic apparatus comprising:
a recording/reproducing device comprising:
a housing (2) having an opening (2b) for inserting and ejecting a recording medium in and from a device body;
a door member (5) arranged on said opening of said housing; and
a spring member (6) urging said door member arranged on said opening to bring said door member into a closed state, and including a first end (6b) coming into contact with said housing and a second end (6c) coming into contact with said door member, wherein
said door member includes a rotary shaft (5b) protruding from a side portion of said door member and arranged with said spring member, and a stop portion (5c) provided closer to a center of said door member along an axial direction of said rotary shaft at a prescribed interval from said rotary shaft and regularly engaged with said second end of said spring member for inhibiting said spring member arranged on said rotary shaft from coming off.
